# EUROPÄISCHE PATENTSCHRIFT

(11) **EP 1 033 278 B1**
(45) Veröffentlichungstag und Bekanntmachung des Hinweises auf die Patenterteilung: **13.10.2004**
(21) Anmeldenummer: 00101905.8
(22) Anmeldetag: 01.02.2000
(51) Int. Cl.: B60N 2/06, F16B 37/04, F16B 41/00

(54) **Verfahren zur Befestigung von Sitzschienen**
Method for fixing a seat slide
Procédé de fixation d'une glissière de siège

(30) Priorität: 03.03.1999 DE 19909283
(43) Veröffentlichungstag der Anmeldung: 06.09.2000
(73) Patentinhaber: KEIPER GmbH & Co. KG, 67657 Kaiserslautern (DE)
(72) Erfinder: Flick, Joachim, 42499 Hückeswagen (DE)
(74) Vertreter: Patentanwälte Hosenthien-Held und Dr. Held

(56) Entgegenhaltungen:
- US-A- 1 820 064
- US-A- 2 335 593
- US-A- 2 879 820
- US-A- 4 488 844
- US-A- 4 948 189
- PATENT ABSTRACTS OF JAPAN vol. 1998, no. 10, 31. August 1998 (1998-08-31) -& JP 10 141334 A (INVENTIO AG), 26. Mai 1998 (1998-05-26)

## Beschreibung

Die Erfindung betrifft ein Verfahren zur Befestigung von Sitzschienen an einer Struktur, insbesondere an der Struktur eines Fahrzeugsitzes, mit den Merkmalen des Oberbegriffs des Anspruches 1 und einen Fahrzeugsitz mit den Merkmalen des Oberbegriffs des Anspruches 5.

Bei einem bekannten Verfahren werden an den zu befestigenden Oberschienen Gewindeplatten angeschweißt, welche als Befestigungselemente dienen. Die Oberschienen werden dann an der Struktur des Fahrzeugsitzes angeschraubt, wobei die hierzu verwendeten Schrauben in Gewindebohrungen der Gewindeplatte greifen. Die Gewindeplatten müssen sehr sorgfältig positioniert und angeschweißt werden, damit keine Verspannungen beim Anschrauben auftreten oder Schweißbatzen in den Gewindebohrungen ein Anschrauben verhindern.

Die US 4,948,189 A offenbart bei einer Sitzschienenanordnung einen Nutenstein, der in x-Richtung in ein zusätzliches Profil eingeführt wird und dem Anschrauben einer Klammer dient. In der US 2,879,820 A ist die Anbringung einer Mutter in einer Schiene beschrieben, wobei die mit einem Fuß versehene Mutter in z-Richtung eingeführt wird und dann aus der Seitenwand der Schiene in der x-y-Ebene vier Laschen ausgestellt werden, welche den Fuß schräg übergreifen mit viel Spiel in z-Richtung sichern. Die US 4,488,844 A zeigt für eine Schiene Befestigungselemente, welche von den Schienenrändern übergriffen und durch in z-Richtung ausgebildete Ausstellungen an bestimmten Positionen in x-Richtung gehalten werden. Eine in der US 2,335,593 A offenbarte Mutter ist mit Füßen versehen, welche durch Drehung der Mutter in Schuhe eingeschoben werden können. Die US 1,829,064 A beschreibt anhand der Befestigung einer Fahrzeugverkleidung, wie Muttern am Bezug in T-förmige Schlitze an der Karosserie eingehängt werden können. Die JP 10-141334 A offenbart eine Gewindeplatte, die x-Richtung in eine Nut eines Profilteils eingeführt wird und mittels einer auf der Außenseite des Profilteils angeordnten Lochplatte verschraubt wird. Mit diesen Lösungen treten zwar keine Schweißbatzen auf, welche die Sitzschiene unbrauchbar machen, jedoch ist für eine Vorpositionierung entweder sehr viel oder gar kein Spiel vorhanden.

Der Erfindung liegt daher die Aufgabe zu Grunde, ein Verfahren der eingangs genannten Art zu verbessern und einen verbesserten Fahrzeugsitz zur Verfügung zu stellen. Diese Aufgabe wird erfindungsgemäß durch ein Verfahren mit den Merkmalen des Anspruches 1 und durch einen Fahrzeugsitz mit den Merkmalen des Anspruches 5 gelöst. Vorteilhafte Ausgestaltungen sind Gegenstand der Unteransprüche.

Dadurch, daß zur Anordnung des Befestigungselementes an der Sitzschiene das Befestigungselement an der Sitzschiene angelegt wird und dann durch Einwirkung auf die Sitzschiene Material im Bereich einer Vertiefung des Befestigungselementes in y-Richtung verdrängt wird unter Bildung einer vorspringenden Materialpartie, welche zusammen mit der Vertiefung das Befestigungselement an der Sitzschiene beweglich sichert, kann beim Befestigen durch einen Positionsausgleich der Aufbau von Verspannungen vermieden werden. Die Einschränkung der Bewegung ist dabei gezielt einstellbar.

Vorzugsweise erfolgt erst mit der endgültigen Befestigung im nächsten Verfahrensschritt die Feinpositionierung des der Sitzschiene zugeordneten Befestigungselementes relativ zur Sitzschiene. Das erfindungsgemäße Verfahren kann sowohl zur Befestigung der Oberschienen an der Struktur des Fahrzeugsitzes als auch dazu verwendet werden, die Unterschienen des Fahrzeugsitzes an der Fahrzeugstruktur zu befestigen, insbesondere wenn die Sitzschienen geringe Blechstärken aufweisen.

In einer bevorzugten Ausführungsform ist mit der Verdrängung des Materials das Befestigungselement in x-Richtung und y-Richtung an der Sitzschiene für den Positionsausgleich beweglich gesichert und in z-Richtung festgelegt, so daß es gegen Verlieren gesichert ist. Vorzugsweise hintergreift die beim Verdrängen des Materials gebildete Materialpartie das Befestigungselement.

Ein erfindungsgemäßer Fahrzeugsitz weist wenigstens eine Sitzschiene auf, die nach dem erfindungsgemäßen Verfahren befestigt ist. Die Herstellung des Fahrzeugsitzes vereinfacht und verbilligt sich, da weniger Ausschuß an Sitzschienen entsteht. Durch die Ausgleichsmöglichkeit über die Sitzschienen können auch eventuell an der Struktur des Fahrzeugsitzes für den Ausgleich vorgesehene Langlöcher entfallen, was die Herstellung des Fahrzeugsitzes weiter vereinfacht und verbilligt.

Die Vertiefung ist vorzugsweise an wenigstens einer Längsseite vorgesehen, welche in y-Richtung vertieft ist, wobei die Materialpartie, bei welcher es sich auch um eine Gaupe handeln kann, ebenfalls in y-Richtung vorspringt. Je nach Abmessung der Materialpartie in x-Richtung verglichen mit der Abmessung der Vertiefung in x-Richtung das Befestigungselement in einem Bereich in x-Richtung und in y-Richtung mehr oder weniger eingeschränkt beweglich ist. Durch die Anordnung wird das Befestigungselement auf einfache Weise an der Sitzschiene gesichert. Als Befestigungselement wird vorzugsweise eine Gewindeplatte gewählt, welche mit Schrauben zusammenwirkt.

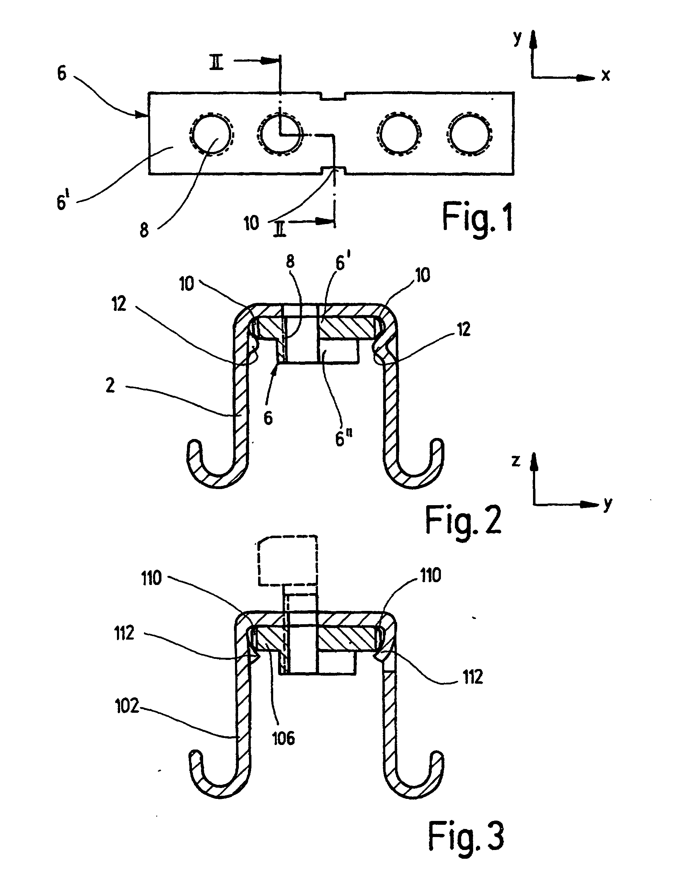

Im folgenden ist die Erfindung anhand eines in der Zeichnung dargestellten Ausführungsbeispiels näher erläutert. Es zeigen
- Fig. 1: eine Draufsicht auf eine einzelne Gewindeplatte,

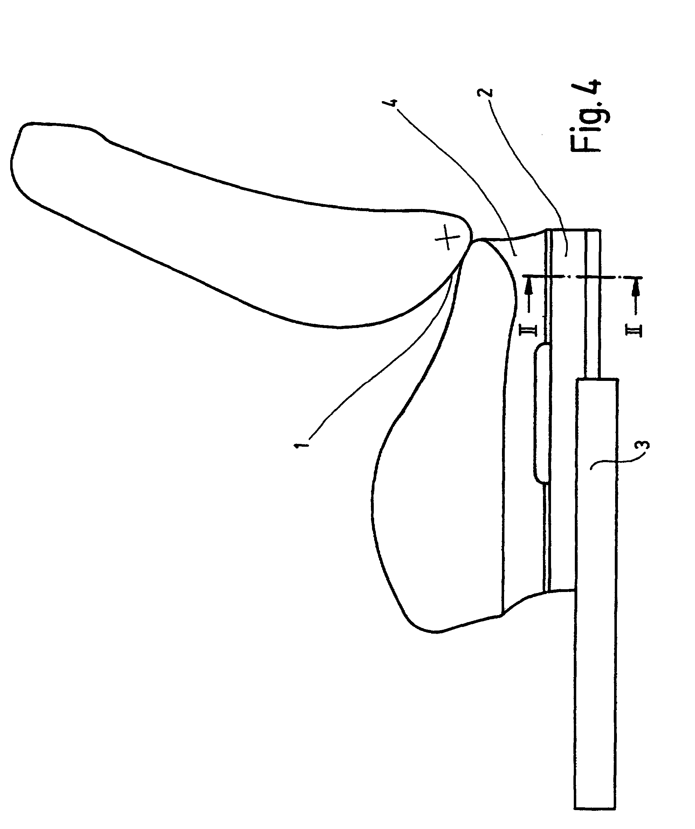

- Fig. 2: einen nur teilweise dargestellten Schnitt durch das erste Ausführungsbeispiel im Bereich der Gewindeplatte entlang der Linie II-II in Fig. 4 und in Fig. 1, wobei die linke Hälfte den Schnitt im Bereich einer Gewindebohrung und die rechte Hälfte den Schnitt im Bereich einer Vertiefung der Gewindeplatte zeigt,
- Fig. 3: einen Schnitt entsprechend Fig. 2 durch das zweite Ausführungsbeispiel mit angedeuteter Schraube in der linken Hälfte,
- Fig. 4: eine schematische Seitenansicht des ersten Ausführungsbeispiels.

Ein Fahrzeugsitz 1 für ein Kraftfahrzeug weist auf jeder Seite eine Oberschiene 2 und eine Unterschiene 3 auf, welche zusammen ein Paar von Sitzschienen bilden. Aufgrund der Sitzschienen 2 und 3 ist der Fahrzeugsitz in der in Fahrtrichtung des Kraftfahrzeuges verlaufenden Sitzlängsrichtung einstellbar. Jede Oberschiene 2 wird in der nachfolgend beschriebenen Weise an der Struktur 4 des Fahrzeugsitzes 1 befestigt, während jede Unterschiene 3 an der Fahrzeugstruktur, insbesondere am Fahrzeugboden, befestigt wird.

Zur Befestigung einer mit mehreren Bohrungen versehenen Sitzschiene 2 oder 3, insbesondere zur Befestigung der Oberschiene 2 an der Struktur 4, werden als Befesdgungselemente eine Gewindeplatte 6 und mehrere, in der Zeichnung nicht dargestellte Schrauben verwendet. Die Gewindeplatte 6 weist einen flachen, ebenen, länglichen Grundkörper 6' auf, der sich in den nachfolgend mit x, y, und z bezeichneten Richtungen erstreckt, wobei x mit der längsten Abmessung zusanunenfällt und y sich in Richtung der mittleren Abmessung (Breite) erstreckt.

In der x-y-Ebene des Grundkörpers 6' sind mehrere, in z-Richtung verlaufende Gewindebohrungen 8 vorgesehen, die in x-Richtung nebeneinander angeordnet sind. Auf der später die Unterseite der Gewindeplatte 6 bildenden Seite des Grundkörpers 6' weist die Gewindeplatte 6 pro Gewindebohrung 8 eine Verdickung 6'' auf, die im Ausführungsbeispiel einstückig mit dem Grundkörper 6' ausgebildet ist und durch die sich die Gewindebohrung 8 (entgegen der z-Richtung) fortsetzt. Die Verdickung 6'' kann auch als zusätzliche Platte angeschweißt sein. Statt der Verdickung 6'' kann auch eine Mutter am Grundkörper 6' angebracht sein, wobei dann die Gewindebohrung 8 vorzugsweise nur innerhalb der Mutter vorgesehen ist. Der Grundkörper 6' ist ferner entlang der in x-Richtung verlaufenden Kanten, vorzugsweise insbesondere auf seiner Unterseite, mit einer Fase versehen.

An den beiden sich in x-z-Richtung erstreckenden Längsseiten des Grundkörpers 6' ist ungefähr in der Mitte des Gewindeplatte 6 jeweils eine Vertiefung 10 vorgesehen, die von der Längsseite her in (bzw. gegen) die y-Richtung vertieft ist und sich über die gesamte Abmessung des Grundkörpers 6' in z-Richtung erstreckt. Die Abmessung der Vertiefung 10 in x-Richtung beträgt beispielsweise 3 mm, während sie in y-Richtung 0,5 mm betragen kann. Die Fase am Grundkörper 6' ist vorzugsweise auch noch im Bereich der Vertiefung 10 ausgebildet.

Bei der Befestigung der Oberschiene 2 wird zunächst die Gewindeplatte 6 in z-Richtung (Befestigungsrichtung) von unten her an die Unterseite der Oberschienen 2 angelegt, wobei die x-Richtung der Gewindeplatte 6 mit der Längsrichtung der Oberschiene 2 übereinstimmt. Nun wird an die Oberschiene 2 auf beiden Seiten eine Pressvorrichtung angesetzt, die so von außen her auf die Oberschiene 2 einwirkt, daß Material in (bzw. entgegen) der y-Richtung verdrängt wird, so daß sich in z-Richtung direkt unterhalb des Grundkörpers 6' der Gewindeplatte 6 bei diesem ersten Ausführungsbeispiel vorspringende Materialpartien 12 bilden, welche die Gewindeplatte 6 hintergreifen.

Die Gewindeplatte 6 wird dadurch so relativ zur Oberschiene 2 angeordnet, daß sie in z-Richtung festgelegt und gegen Verlieren gesichert ist, ohne daß sie fest verstemmt ist. Je nach Abmessung der vorspringenden Materialpartie 12 in x-Richtung verglichen mit der Abmessung der Vertiefung 10 in x-Richtung ist die Gewindeplatte 6 durch die gewählte Anordnung in einem Bereich in x-Richtung und in y-Richtung (quer zur Befestigungsrichtung) mehr oder weniger eingeschränkt beweglich.

Nachdem die Oberschiene 2 auf die beschriebene Weise mit der notwendigen Anzahl von Gewindeplatten 6 versehen ist, wird die Oberschiene 2 an die Struktur 4 angesetzt, wobei die Längsrichtung der Oberschiene 2 und die Sitzlängsrichtung übereinstimmen, und mittels der Schrauben befestigt, welche durch die Bohrungen der Oberschiene 2 greifen und in die Gewindebohrungen 8 eingeschraubt werden. Dadurch erfolgt die endgültige Feinpositionierung der Gewindeplatte 6 relativ zur Oberschiene 2 und zur Sitzstruktur 4. Vorzugsweise sind die Abmessung der Vertiefung 10 und der vorspringenden Materialpartien 12 so gewählt, daß deren Differenz, welche die Bewegungsmöglichkeit der Gewindeplatte 6 wiedergibt, kleiner ist als der Radius der Gewindebohrungen 8. Beim Einschrauben der Schrauben ist dann sichergestellt, daß die Schrauben die Gewindebohrungen 8 treffen und eine entsprechende Zentrierung vornehmen.

Im zweiten Ausführungsbeispiel wird eine Gewindeplatte 106, welche derjenigen im ersten Ausführungsbeispiel gleicht, in nahezu der gleichen Weise an einer Oberschiene 102 angeordnet. Der Unterschied besteht darin, daß die Pressvorrichtung als vorspringende Materialpartien nunmehr Gaupen 112 an der Oberschiene 102 ausbildet, d.h. im Bereich von Vertiefungen 110 einer Gewindeplatte 106 werden Materialpartien auf einer Seite vom Material der Oberschiene 102 (entlang der x-Richtung) abgetrennt und nach innen (in bzw. entgegen der y-Richtung) gebogen. Die Funktion und Wirkung der Gaupen 112 stimmt mit derjenigen der vorspringenden Materialpartien 12 im ersten Ausführungsbeispiel überein.

### Bezugszeichenliste

- 1: Fahrzeugsitz (erstes Ausführungsbeispiel)
- 2: Oberschiene (Sitzschiene)
- 3: Unterschiene
- 4: Struktur
- 6: Gewindeplatte
- 6': Grundkörper
- 6": Verdickung
- 8: Gewindebohrung
- 10: Vertiefung
- 12: vorspringende Materialpartie
- 102: Oberschiene (im zweiten Ausführungsbeispiel)
- 106: Gewindeplatte
- 110: Vertiefung
- 112: Gaupe

## Patentansprüche

1. Verfahren zur Befestigung von Sitzschienen (2; 102) an einer Struktur (4), insbesondere an der Struktur (4) eines Fahrzeugsitzes (1), bei dem zunächst eines von wenigstens zwei zusammenwirkenden Befestigungselementen (6; 106) an einer der Sitzschienen (2; 102) angeordnet wird, wobei das Befestigungselement (6; 106) innerhalb eines eingeschränkten Bereichs wenigstens in x-Richtung relativ zur Sitzschiene (2; 102) beweglich ist, und dann die Sitzschiene (2; 102) samt Befestigungselement (6; 106) mittels des anderen Befestigungselementes endgültig an der Struktur (4) befestigt wird, **dadurch gekennzeichnet, daß** zur Anordnung des Befestigungselementes (6; 106) an der Sitzschiene (2; 102) das Befestigungselement (6; 106) an der Sitzschiene (2; 102) angelegt wird und dann durch Einwirkung auf die Sitzschiene (2; 102) Material im Bereich einer Vertiefung (10; 110) des Befestigungselementes (6; 106) in y-Richtung verdrängt wird unter Bildung einer vorspringenden Materialpartie (12; 112), welche das Befestigungselement hintergreift und zusammen mit der Vertiefung (10; 110) das Befestigungselement (6; 106) an der Sitzschiene (2; 102) beweglichsichert.

2. Verfahren nach Anspruch 1, **dadurch gekennzeichnet, daß** mit der endgültigen Befestigung die Feinpositionierung des der Sitzschiene (2; 102) zugeordneten Befestigungselementes (6; 106) relativ zur Sitzschiene (2; 102) erfolgt.

3. Verfahren nach Anspruch 1 oder 2, **dadurch gekennzeichnet, daß** das Befestigungselement (6; 106) in z-Richtung an die Sitzschiene (2; 102) angelegt wird.

4. Verfahren nach einem der Ansprüche 1 bis 3, **dadurch gekennzeichnet, daß** mit der Verdrängung des Materials das Befestigungselement (6; 106) in x-Richtung und y-Richtung an der Sitzschiene (2; 102) beweglich gesichert und in z-Richtung festgelegt wird.

5. Fahrzeugsitz, insbesondere Kraftfahrzeugsitz, mit wenigstens einer Sitzschiene (2; 102), die nach einem der Ansprüche 1 bis 4 befestigt ist.

6. Fahrzeugsitz nach Anspruch 5, **dadurch gekennzeichnet, daß** das Befestigungselement (6; 106) an wenigstens einer der sich in x-z-Richtung erstreckenden Längsseiten die Vertiefung (10; 110) aufweist, welche in y-Richtung vertieft ist.

7. Fahrzeugsitz nach Anspruch 6, **dadurch gekennzeichnet**, daßje nach Abmessung der Materialpartie (12; 112) in x-Richtung verglichen mit der Abmessung der Vertiefung (10; 110) in x-Richtung das Befestigungselement (6; 106) in einem Bereich in x-Richtung und in y-Richtung mehr oder weniger eingeschränkt beweglich ist.

8. Fahrzeugsitz nach einem der Ansprüche 5 bis 7, **dadurch gekennzeichnet, daß** das der Sitzschiene (2; 102) zugeordnete Befestigungselement (6; 106) als Gewindeplatte ausgebildet ist, welche wenigstens eine Gewindebohrung (8) aufweist.

9. Fahrzeugsitz nach Anspruch 7 und 8, **dadurch gekennzeichnet, daß** die Differenz zwischen der Länge der Vertiefung (10; 110) im Befestigungselement (6; 106) und der Abmessung der vorspringenden Materialpartie (12; 112) in der gleichen Richtung kleiner ist als der Radius der Gewindebohrung (8).

## Claims

1. A method of fixing seat slide rails (2; 102) to a structure (4), especially to the structure (4) of a vehicle seat (1), in which first of all one of at least two co-operating fixing elements (6; 106) is arranged on one of the seat slide rails (2; 102), the fixing element (6; 106) being movable within a restricted range at least in the x-direction relative to the seat slide rail (2; 102), and then the seat slide rail (2; 102) together with the fixing element (6; 106) is finally fixed by means of the other fixing element to the structure (4), **characterised in that**, for arrangement of the fixing element (6; 106) on the seat slide rail (2; 102), the fixing element (6; 106) is placed on the seat slide rail (2; 102) and then, by action on the seat slide rail (2; 102), material in the region of a recess (10; 110) of the fixing element (6; 106) is displaced in the y-direction to form a projecting material portion (12; 112) that engages behind the fixing element and together with the recess (10; 110) movably secures the fixing element (6; 106) to the seat slide rail (2; 102).

2. A method according to claim 1, **characterised in that**, with the final fixing, the precision positioning of the fixing element (6; 106) associated with the seat slide rail (2; 102) relative to the seat slide rail (2; 102) is effected.

3. A method according to claim 1 or 2, **characterised in that** the fixing element (6; 106) is mounted in the z-direction on the seat slide rail (2; 102).

4. A method according to any one of claims 1 to 3, **characterised in that** with the displacement of the material the fixing element (6; 106) is movably secured in the x-direction and the y-direction to the seat slide rail (2; 102) and is fixed in the z-direction.

5. A vehicle seat, especially a motor vehicle seat, having at least one seat slide rail (2; 102) that is fixed in accordance with one of claims 1 to 4.

6. A vehicle seat according to claim 5, **characterised in that** the fixing element (6; 106) has the recess (10; 110), which is recessed in the y-direction, on at least one of the longitudinal sides extending in the x-z direction.

7. A vehicle seat according to claim 6, **characterised in that** depending on the dimension of the material part (12; 112) in the x-direction compared with the dimension of the recess (10; 110) in the x-direction, the fixing element (6; 106) is movable in a range in the x-direction and in the y-direction to a more or less limited extent.

8. A vehicle seat according to any one of claims 5 to 7, **characterised in that** the fixing element (6; 106) associated with the seat slide rail (2; 102) is in the form of a threaded plate that has at least one threaded bore (8).

9. A vehicle seat according to claim 7 or 8, **characterised in that** the difference between the length of the recess (10; 110) in the fixing element (6; 106) and the dimension of the projecting material portion (12; 112) in the same direction is less than the radius of the threaded bore (8).

## Revendications

1. Procédé pour fixer des glissières de siège (2 ; 102) à une structure (4) en particulier à la structure (4) d'un siège de véhicule (1), dans lequel, tout d'abord, on attache l'un d'au moins deux éléments de fixation coopérant entre eux (6 ; 106) à l'une des glissières de siège (2 ; 102), l'élément de fixation (6 ; 106) étant mobile dans une zone limitée au moins dans une direction x par rapport à la glissière de siège (2 ; 102) et, ensuite, on fixe définitivement la glissière de siège (2 ; 102), munie de l'élément de fixation (6 ; 106), à la structure (4) au moyen de l'autre élément de fixation, **caractérisé par le fait que**, pour attacher l'élément de fixation (6 ; 106) à la glissière de siège (2 ; 102), on applique l'élément de fixation (6 ; 106) contre la glissière de siège (2 ; 102) et, ensuite, en agissant sur la glissière de siège (2 ; 102), on refoule de la matière dans la région d'un creux (10 ; 110) de l'élément de fixation (6 ; 106) dans une direction y, avec formation d'une partie de matière saillante (12 ; 112), qui s'engage derrière l'élément de fixation et, en coopération avec le creux (10 ; 110), retient l'élément de fixation (6 ; 106) mobile contre la glissière de siège (2 ; 102).

2. Procédé selon la revendication 1, **caractérisé par le fait qu'**avec la fixation définitive, se produit le positionnement fin de l'élément de fixation (6 ; 106) associé à la glissière de siège (2 ; 102), relativement à la glissière de siège (2 ; 102).

3. Procédé selon l'une des revendications 1 ou 2, **caractérisé par le fait qu'**on applique l'élément de fixation (6 ; 106) contre la glissière de siège (2 ; 102) dans la direction z.

4. Procédé selon l'une des revendications 1 à 3, **caractérisé par le fait qu'**avec le refoulement de la matière, l'élément de fixation (6 ; 106) est retenu mobile contre la glissière de siège (2 ; 102) dans la direction x et dans la direction y, et est immobilisé dans la direction z.

5. Siège de véhicule, en particulier siège de véhicule automobile, comprenant au moins une glissière de siège (2 ; 102) qui est fixée conformément à l'une des revendications 1 à 4.

6. Siège de véhicule selon la revendication 5, **caractérisé par le fait que** l'élément de fixation (6 ; 106) présente le creux (10 ; 110) creusé dans la direction y sur au moins un des côtés longitudinaux s'étendant dans la direction x-z.

7. Siège de véhicule selon la revendication 6, **caractérisé par le fait que**, selon la dimension de la partie de matière (12 ; 112) dans la direction x, comparée à la dimension du creux (10 ; 110) dans la direction x, l'élément de fixation (6 ; 106) est mobile à un degré plus ou moins limité dans une zone dans la direction x et dans la direction y.

8. Siège de véhicule selon l'une des revendications 5 à 7, **caractérisé par le fait que** l'élément de fixation (6 ; 106) associé à la glissière de siège (2 ; 102) est constitué par une plaque filetée qui présente au moins un perçage fileté (8).

9. Siège de véhicule selon l'une des revendications 7 ou 8, **caractérisé par le fait que** la différence entre la longueur du creux (10 ; 110) formé dans l'élément de fixation (6 ; 106) et la dimension de la partie de matière saillante (12 ; 112) dans la même direction est plus petite que le rayon du perçage fileté (8).
